# EUROPEAN PATENT APPLICATION

(11) **EP 2 266 902 A1**
(43) Date of publication of application: **29.12.2010**
(21) Application number: 09725397.5
(22) Date of filing: 17.03.2009
(51) Int. Cl.: B65G 61/00, G06F 19/00, G06Q 50/00

(54) **COURSE CREATION SYSTEM AND COURSE CREATION METHOD**

(30) Priority: 28.03.2008 JP 2008085113
(71) Applicant: Japan Tobacco, Inc., Tokyo 105-8422 (JP)
(72) Inventor: HIRAI, Sadayuki, Tokyo 105-8422 (JP)
(74) Representative: HOFFMANN EITLE
(86) International application number: PCT/JP2009/001180
(87) International publication number: WO 2009/119040

(57) **Abstract**

A course creation system 100 creates a course by ranking up the individual delivery points depending on presence or absence of time specification, and on frequencies of delivery, while assuming the presence of time specification as the first priority condition, and the highness of frequency of delivery as the second priority condition, and, upon selection of a most highly-ranked delivery point, then by creating a preliminary course by determining an order of visiting of the delivery points according to the time specification of the individual delivery points, and by inserting a delivery point selected thereafter to a location of order capable of maximizing the number of delivery points supposed to be highly punctual about the time specification.

## Description

### TECHNICAL FIELD

The present invention relates to a course creation system and a method of course creation.

### BACKGROUND ART

Patent Document 1 (Japanese Laid-Open Patent Publication No. 2004-127038) describes a system of dividing an area, having a plurality of vending machines installed therein, into assigned areas for the individual workers who conducts deliveries to the vending machines. The system has an initial setting unit which sets, in a region having a plurality of vending machine installed therein, a plurality of areas each containing at least one vending machine corresponding to the number of workers; a calculation unit which calculates a statistic determined by characteristics of the vending machine contained in each area; and a processing unit which repetitively executes a process of selecting a specific area in consideration of the statistic and expanding the area by adding a vending machine, terminates the process when a predetermined condition is satisfied, and determines the obtained areas as assigned areas for the plurality of workers. In this way, the region having a plurality of vending machines installed therein can be divided into the assigned areas so as to allow the individual workers to conduct deliveries in an efficient manner.
[Patent Document 1] Japanese Laid-Open Patent Publication No. 2004-127038

### DISCLOSURE OF THE INVENTION

On the other hand, in recent years, convenience stores have increasingly been utilized, with increased volume of various commodities handled therein. In the convenience stores, commodities to be handled are often managed in a systematic manner, and the delivery time of the commodities is often assigned or specified in a strict manner. Therefore, in the delivery of commodities to this sort of shops, it has become increasingly important to be strict about the assigned time. The technique described in Patent Document 1 is designed to calculate, by using an approximation algorithm, an order of visiting which ensures delivering around the shops contained in a course along the shortest path, and to create a course which allows an efficient delivering. However, in the delivery to shops assigned with time specification, the technique has been suffering from a problem in terms of punctuality about the time specification.

The present invention is conceived after considering the above-described situation, an object of which is to provide a technique of creating a course, having a plurality of delivery points characterized by different frequencies of delivery necessarily be done in a predetermined period, and assigned with or without time specification which indicates an acceptable time of delivery, so that the delivery points assigned with the time specification may be visited in a highly punctual and efficient manner.

According to the present invention, there is provided a system of creating a course of delivery of commodities to a plurality of types of a plurality of delivery points characterized by different frequencies of delivery necessarily be done in a predetermined period, and assigned with or without time specification which indicates an acceptable time of delivery, including:
a delivery point selection unit which ranks up the individual delivery points depending on presence or absence of the time specification, and on the frequencies of delivery, assuming the presence of time specification as the first priority condition, and the highness of frequency of delivery as the second priority condition; and repeats a processes of sequentially selecting the delivery points, firstly from the delivery points with higher rank until a predetermined condition is satisfied, and, once the predetermined condition of the delivery points with the higher rank is satisfied, next from the delivery points with next higher rank;
an order determination unit which determines an order of visiting the delivery points selected by the delivery point selection unit;
a time calculation unit which calculates a time of arrival to each of the delivery points, when the delivery points selected by the delivery point selection unit are visited according to the order determined by the order determination unit;
an evaluation value calculation unit which calculates an evaluation value of a course, in such a way that a course which contains a larger number of delivery points supposed to be highly punctual about the time specification, among the delivery points assigned with the time specification, is given a higher evaluation value, based on the time of arrival calculated by the time calculation unit;
a preliminary course creation unit which creates, upon selection of the delivery points with the most highest rank made by the delivery point selection unit until the predetermined conditions are satisfied, a preliminary course along which the delivery points are visited according to the order determined by the order determination unit; and
a course refining unit which creates a course by sequentially adding, to the preliminary course created by the preliminary course creation unit, delivery points selected thereafter by the delivery point selection unit.
The order determination unit determines an order of the delivery points contained in the preliminary course, according to the time specification of each of the delivery points, and, after the preliminary course is created, when the delivery point selection unit selects a delivery point not assigned with any time specifications, inserts the delivery point to an location of order capable of maximizing the evaluation value of the course calculated by the evaluation value calculation unit.

By virtue of this configuration, a course, which contains a plurality of delivery points characterized by different frequencies of delivery and assigned with or without time specification, may be created, in such a way that the delivery points assigned with the time specification may be visited in a highly punctual and efficient manner.

In the course creation system of the present invention, when the delivery point selection unit selects a delivery point with a low frequency of delivery rank, the course refining unit may repeat a process of making the evaluation value calculation unit calculate the evaluation values for the respective cases when the delivery point with the low frequency of delivery rank is inserted respectively in the courses each of along which the commodities are delivered to the delivery points with higher frequency of delivery rank, and of inserting the delivery point with the low frequency of delivery rank into a course capable of yielding a higher evaluation value.

The course creation system of the present invention may further include a time-zone-keepable shop counting unit which counts, based on the time of arrival calculated by the time calculation unit, the number of delivery points which are characterized by the time of arrival thereto fallen in a zone of the time specification, and are therefore capable of keeping the time specification, among all delivery points assigned with the time specification, and the evaluation value calculation unit may calculates a higher evaluation value for a course which contains a larger number of delivery points capable of keeping the time specification calculated by the time-zone-keepable shop counting unit.

In the course creation system of the present invention, upon occurrence of the same number of the delivery points capable of keeping the time specification, the time-zone-keepable shop counting unit may calculate respective differences between the time specification and the respective times of arrival of all delivery points incapable of keeping the time specification, and may judge that a smaller total value of the differences means a larger number of delivery points capable of keeping the time specification.

In the course creation system of the present invention, the time calculation unit may also calculate a total time necessary for visiting all of the delivery points selected by the delivery point selection unit, when the delivery points are visited according to the order determined by the order determination unit, and upon occurrence of the same number of the delivery points supposed to be highly punctual about the time specification, the evaluation value calculation unit may calculate a higher evaluation value corresponding to a shorter total time calculated by the time calculation unit.

In the course creation system of the present invention, upon creation of the preliminary course by the preliminary course creation unit, and upon selection of a delivery point assigned with the time specification by the delivery point selection unit, the order determination unit may select locations where the delivery point is insertable based on the time specification of its own, may make the evaluation value calculation unit calculate the evaluation values for respective cases where the delivery point is inserted to the respective locations, and may insert the delivery point into one of the locations capable of maximizing the evaluation value.
In this way, since the process of calculating the evaluation value may be carried out after the locations to be inserted with the delivery point is narrowed, so that the process may be simplified.

In the course creation system of the present invention, for the case where a delivery point is assigned with two or more separate time specifications, the order determination unit may respectively handle all of the time specifications as the time specification of the delivery point, and may determine a time specification, capable of maximizing the evaluation value calculated by the evaluation value calculation unit, with respect to the individual conditions, as the time specification of the delivery point.

The course creation system of the present invention may further include an improvement processing unit which repeats an operation that includes creating an improvement candidate course characterized by a modified order of visiting of the delivery points contained in the course created by the course refining unit, judging whether the evaluation value calculated by the evaluation value calculation unit goes higher or not, and if goes higher, defining the improvement candidate course as an improved course.
In this way, a course along which the delivery points assigned with the time specification may be visited in a highly punctual and efficient manner, can be created.

In the course creation system of the present invention, the improvement processing unit may create the improvement candidate course by aligning the delivery points contained in the course created by the course refining unit, according to an order reversed from the order determined by the order determination unit.

In the course creation system of the present invention, the improvement processing unit may replace the delivery points contained in the course created by the course refining unit, respectively with each of other delivery points contained in the course, and may create the improvement candidate course by making replacement capable of maximizing the evaluation value calculated by the evaluation value calculation unit.

In the course creation system of the present invention, the improvement processing unit may select one or more of the delivery points aligned in line according to the order determined by the order determination unit, from the course created by the course refining unit, inserts the delivery point(s) between other delivery points contained in the course, and may create the improvement candidate course by making replacement capable of maximizing the evaluation value calculated by the evaluation value calculation unit.

In the course creation system of the present invention, the improvement processing unit may create the improvement candidate course by moving a delivery point ranked at a lower frequency of delivery, into a course different from the currently-selected course.

According to the present invention, there is provided a method of creating a course of delivery of commodities to a plurality of types of a plurality of delivery points characterized by different frequencies of delivery necessarily be done in a predetermined period, and assigned with or without time specification which indicates an acceptable time of delivery, including:
a step of repeating a process of ranking up the individual delivery points depending on presence or absence of the time specification, and on the frequencies of delivery, assuming the presence of time specification as the first priority condition, and the highness of frequency of delivery as the second priority condition; and repeating a processes of sequentially selecting the delivery points, firstly from the delivery points with higher rank until a predetermined condition is satisfied, and, once the predetermined condition of the delivery points with the higher rank is satisfied, next from the delivery points with next higher rank;
a step of determining an order of visiting the delivery points selected in the step of sequentially selecting the delivery points;
a step of calculating a time of arrival to each of the delivery points, when the delivery points are visited according to the order determined in the step of determining the order of visiting the delivery points;
a step of calculating an evaluation value of a course, in such a way that a course which contains a larger number of delivery points supposed to be highly punctual about the time specification, among the delivery points assigned with the time specification, is given a higher evaluation value, based on the time of arrival calculated in the step of calculating the time of arrival;
a step of creating, upon selection of the delivery points with the most highest rank made in the step of sequentially selecting the delivery points until the predetermined conditions are satisfied, a preliminary course along which the delivery points are visited according to the order determined in the step of determining the order of visiting the delivery points; and
a step of creating a course by sequentially adding, to the preliminary course created in the step of creating the preliminary course, delivery points selected thereafter in the step of sequentially selecting the delivery points.
In the step of determining the order of visiting the delivery points, an order of the delivery points contained in the preliminary course, according to the time specification of each of the delivery points, and, after the preliminary course is created, in the step of sequentially selecting the delivery points, when a delivery point not assigned with any time specifications is selected, the delivery point is inserted to an order of location capable of maximizing the evaluation value.

In the method of course creation of the present invention, in the step of creating the course, when a delivery point with a low frequency of delivery rank is selected in the step of sequentially selecting the delivery points, a process of inserting the delivery point into a course capable of maximizing the evaluation value, among the respective cases when the delivery point with the low frequency of delivery rank is contained respectively in the courses along which the commodities are delivered to the delivery points with higher frequency of delivery may be repeated.

The method of course creation of the present invention may further include a step of counting, based on the time of arrival calculated in the step of calculating the time, the number of delivery points which are characterized by the time of arrival thereto fallen in a zone of the time specification, and are therefore capable of keeping the time specification, among all delivery points assigned with the time specification, and in the step of calculating the evaluation value, a higher evaluation value may be calculated corresponding to a course which contains a larger number of delivery points capable of keeping the time specification calculated in the step of calculating the number of the delivery points.

In the method of course creation of the present invention, in the step of calculating the number of the delivery points, upon occurrence of the same number of the delivery points capable of keeping the time specification, respective differences between the time specification and the respective times of arrival of all delivery points incapable of keeping the time specification may be calculated, and a smaller total value of the differences may be judged as a larger number of delivery points capable of keeping the time specification.

In the method of course creation of the present invention, the step of calculating a time of arrival, also a total time necessary for visiting all of the delivery points, when the delivery points selected in the step of sequentially selecting the delivery points are visited according to the order determined in the step of determining the order of visiting the delivery points, may be calculated, and in the step of calculating the evaluation value, upon occurrence of the same number of the delivery points supposed to be highly punctual about the time specification, a higher evaluation value may be calculated corresponding to a shorter total time calculated in the step of calculating the time of arrival.

Note that also all arbitrary combinations of the above-described constituents, and all exchanges in the expression of the present invention made among the method, device, system, rewording medium, computer program and so forth, are valid as embodiments of the present invention.

According to the present invention, a course, which contains a plurality of delivery points characterized by different frequencies of delivery and assigned with or without time specification which indicates an acceptable time of delivery, can be created, so that the delivery points assigned with the time specification may be visited in a highly punctual and efficient manner.

### BRIEF DESCRIPTION OF THE DRAWINGS

The above and other objects, features and advantages of the present invention will be more apparent from the following description of certain preferred embodiment taken in conjunction with the accompanying drawings, in which:

FIG. 1 is a block diagram illustrating a configuration of a course creation system in the embodiments of the present invention;
FIG. 2 is a drawing illustrating a part of a data structure of a shop information storage unit in the embodiment of the present invention;
FIG. 3 is a drawing illustrating a part of a data structure of a shop information storage unit in the embodiment of the present invention;
FIGs. 4(a) and 4(b) are drawings illustrating shops to be included in a course;
FIGs. 5(a) to 5(d) are drawings illustrating procedures of determining an order of visiting shops executed by an order determination unit;
FIG. 6 is a drawing illustrating time of arrival to the individual shops calculated by a time calculation unit;
FIG. 7 is a drawing illustrating shops to be included in a course;
FIGs. 8(a) and 8(b) are drawings respectively illustrating a first duplicated course and a second duplicated course;
FIGs. 9(a) and 9(b) are drawings illustrating a first duplicated course and a second duplicated course;
FIGs. 10(a) and 10(b) are drawings illustrating a first duplicated course and a second duplicated course;
FIGs. 11(a) and 11(b) are drawings illustrating a first duplicated course and a second duplicated course;
FIGs. 12(a) and 12(b) are drawings illustrating a first duplicated course and a second duplicated course;
FIGs. 13(a) and 13(b) are drawings illustrating a first duplicated course and a second duplicated course;
FIGs. 14(a) and 14(b) are drawings illustrating a first duplicated course and a second duplicated course;
FIGs. 15(a) and 15(b) are drawings illustrating a first duplicated course and a second duplicated course;
FIGs. 16(a) and 16(b) are drawings illustrating a first duplicated course and a second duplicated course;
FIGs. 17(a) and 17(b) are drawings illustrating a first duplicated course and a second duplicated course;
FIG. 18 is a drawing illustrating a part of data structure of a shop information storage unit T3 in the embodiment of the present invention;
FIGs. 19(a) and 19 (b) are drawings illustrating a preliminary course;
FIG. 20 is a flow chart illustrating procedures of creating a course in the embodiment of the present invention;
FIG. 21 is a flow chart illustrating procedures of improvement operations;
FIGs. 22(a) to 22(d) are drawings explaining an improvement operation;
FIGs. 23(a) to 23(c) are drawings explaining an improvement operation;
FIG. 24 is a drawing explaining an improvement operation;
FIGs. 25(a) to 25(d) are drawings explaining an improvement operation;
FIGs. 26(a) and 26(b) are drawings illustrating procedures of creating a shuttle course; and
FIG. 27 is a drawing illustrating procedures of creating a shuttle course.

### BEST MODE FOR CARRYING OUT THE INVENTION

Embodiments of the present invention will be explained below, referring to the attached drawings. Note that all similar constituents in all drawings are given similar reference numerals or symbols, and explanations therefore will not always be repeated.

Embodiments of the present invention will be explained, referring to the case where the delivery points are shops. The shops may typically be convenience stores, supermarkets, and so forth. In this embodiment, a course creation system creates a course along which a worker delivers commodities from a delivery base to a plurality of shops (delivery points) and comes back to the delivery base. These shops includes shops characterized by different frequencies of delivery necessarily be done in a predetermined period, and assigned with or without time specification which indicates an acceptable time of delivery.

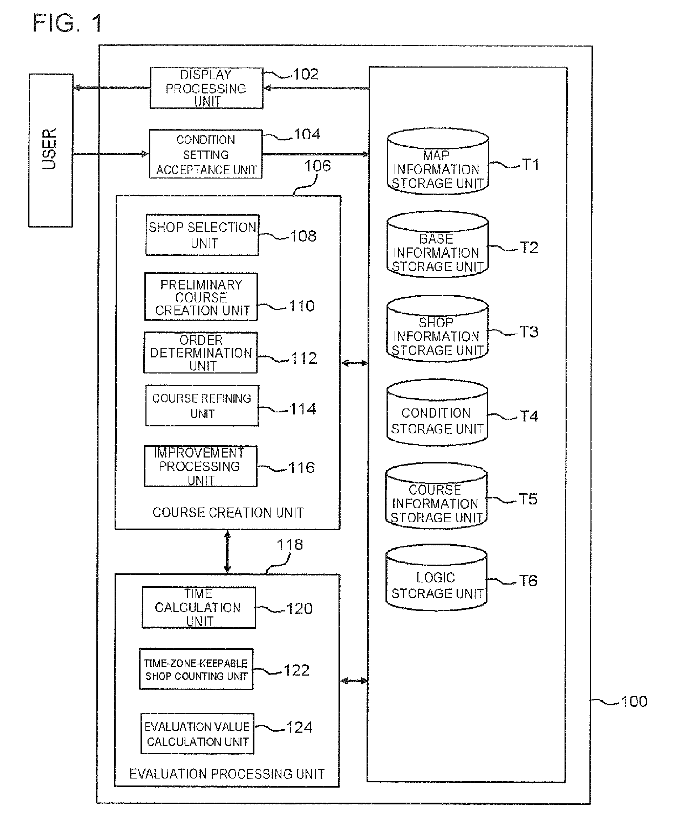

FIG. 1 is a block diagram illustrating a configuration of a course creation system 100 in this embodiment.
The course creation system 100 includes a display processing unit 102, a condition setting acceptance unit 104, a course creation unit 106, an evaluation processing unit 118, a map information storage unit T1, a base information storage unit T2, a shop information storage unit T3, a condition storage unit T4, and a logic storage unit T6. The course creation unit 106 includes a shop selection unit 108, a preliminary course creation unit 110, an order determination unit 112, a course refining unit 114, and an improvement processing unit 116. The evaluation processing unit 118 includes a time calculation unit 120, a time-zone-keepable shop counting unit 122, and an evaluation value calculation unit 124.

The display processing unit 102 processes displaying various data and state of a created course, together with map information, on the screen (not illustrated).

The condition setting acceptance unit 104 accepts various setting of conditions necessary for creating a course from the user. The condition setting acceptance unit 104 accepts setting of conditions such as daily reference working time of the individual workers, minimum working time, start time of working, loading time of commodities, rest time, working time after coming back to the base, standard working time at each shop, standard travel speed between each shops, standard travel speed between the base and the shops, maximum load and minimum load of trucks, allowable ratio of loading and so forth. The condition setting acceptance unit 104 may also accept setting of maximum and minimum values of course time. The condition storage unit T4 stores the thus-set conditions.

The map information storage unit T1 stores map information data of a region allowing a course to be created therein. The base information storage unit T2 stores base information data. The base information data contains identification codes of the bases, names of the bases, locations of the bases (latitude and longitude, or, X-coordinate and Y-coordinate) and so fourth. The base herein means a delivery base such as a logistic center in the region. A logic storage unit T6 stores logics relevant to various processing procedures. The course information storage unit T5 stores course information created by the course creation unit 106.

The shop information storage unit T3 stores shop information data. The shop information data includes shop-related information including identification codes of bases, identification codes of shops, names of shops, locations of shops (latitude, longitude and altitude, or, X-coordinate, Y-coordinate and Z-coordinate), quantity of delivery per one round, monthly number of times of delivery, date/hour conditions for delivery, working time (min.) per one round, travel speed (km/h) from base, travel speed (km/h) between shops, monthly sales (yen), monthly sales volume (unit) and so forth.

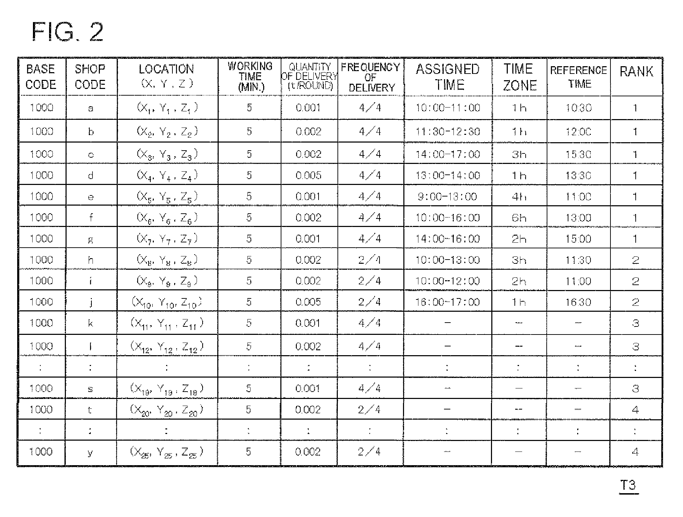

FIG. 2 is a drawing illustrating a part of a data structure of the shop information storage unit in T3 this embodiment.
The shop information storage unit T3 herein typically contains a base code column, a shop code column, a location column, a working time column, a quantity-of-delivery column, a frequency-of-delivery column, an assigned time column, a time zone column, a reference time column, and a rank column. For example, a shop assigned with shop code "a" belongs to a base characterized by a base code of "1000", a location of "(X₁,Y₁,Z₁)", a working time at this shop of "5 min.", a quantity of delivery per one round of "0.001 t", a frequency of delivery of "4/4", a time specification (assigned time) of "10:00-11:00", a time zone of "1 h", a reference time of "10:30", and a rank of "1".

Note that a frequency of delivery of "4/4" herein means four times per four weeks, representing that weekly delivery is necessary. On the other hand, a frequency of delivery of "2/4" means twice per four weeks, representing that biweekly delivery is necessary. In this embodiment, an exemplary case where the "4/4" shops in need of weekly delivery and the "2/4" shops in need of biweekly delivery reside in a mixed manner. In other words, it may be good enough for the 2/4 shops to be visited once for one of every two rounds of delivery to the 4/4 shops. A time specification of "10:00-11:00" herein means that a point of time which indicates an acceptable time of delivery is assigned between 10:00 to 21:00. In this exemplary case, a middle point of the assigned delivery time is defined as the reference time. The shops having "-" in the time specification column are those having no time specification assigned thereto.

For example, the shops having the shop codes of "a", "b", "c", "d", "e", "f" and "g" are assigned with the time specification, and are characterized by a frequency of delivery of 4/4. On the other hand, the shops having the shop codes of "h", "i" and "j" are assigned with the time specification, and are characterized by a frequency of delivery of 2/4. The shops having the shop codes of "k" to "s" have no time specification assigned thereto, and are characterized by a frequency of delivery of 4/4. The shops having the shop codes of "t" to "y" again have no time specification, and are characterized by a frequency of delivery of 2/4.

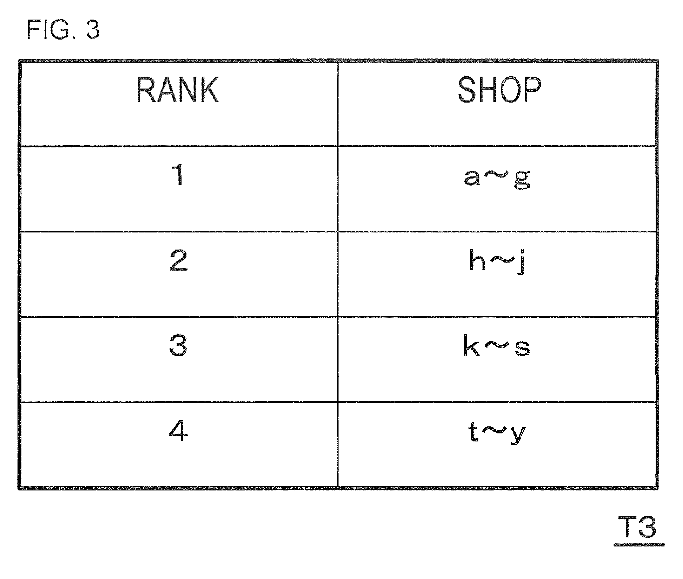

In this embodiment, the individual shops are ranked up depending on presence or absence of the time specification, and on the frequencies of delivery, assuming the presence of time specification as the first priority condition, and the highness of frequency of delivery as the second priority condition. More specifically, first, according to the first priority condition, the shops with the shop codes "a" to "j" assigned with the time specification are selected. Next, according to the second priority condition, among these shops, the shops with the shop codes "a" to "g" having the highest frequency of delivery are ranked at "1", which is the highest rank. Next, among the shops assigned with the time specification, the shops with the shop codes "h" to "j" having the second highest frequency of delivery are ranked at "2", which is the second highest rank. After all shops with the time specification are ranked in this way, among the shops having no time specification assigned thereto, the shops with the shop codes "k" to "s", characterized by the highest frequency of delivery are then ranked at rank "3", which is the third highest rank. Next, among the shops having no time specification assigned thereto, the shops with the shop code "t" to "y" characterized by the second highest frequency of delivery are ranked at 4, which is the forth highest rank. The shop information storage unit T3 may contain a table which correlates the ranks with the shops. FIG. 3 is a drawing illustrating this sort of table.

Referring now back to FIG. 1, the course creation unit 106 creates a course along which a worker delivers commodities from a delivery base to a plurality of shops and comes back to the delivery base. The shop selection unit 108 (delivery point selection unit) repeats a process such as sequentially selecting the shops in decreasing order of rank until a predetermined condition is satisfied, and, once the predetermined condition is satisfied, selecting the shops ranked at the next. In this embodiment, an exemplary case, where a course is created while the shops to be included in a course are preliminarily set and stored in the shop information storage unit T3, will be explained. In this embodiment, the predetermined conditions may be defined as a case where all shops ranked at the same level and stored in the shop information storage unit T3 are selected.

Upon selection of the shops ranked at "1" by the shop selection unit 108 until the predetermined condition is satisfied, the preliminary course creation unit 110 creates a preliminary course which contains these shops.

The course refining unit 114 then executes a process of creating a course, by sequentially adding the shops selected thereafter by the shop selection unit 108, to the preliminary course created by the preliminary course creation unit 110.

The order determination unit 112 determines an order of visiting the shops contained in the preliminary course and the course. In this embodiment, if the shops are assigned with the time specification, the order determination unit 112 determines an order of visiting the shops according to the time specification. In this process, the order determination unit 112 may determine the order typically based on the reference time of the individual shops, so as to align the shops in the order of the reference time. Alternatively, the order determination unit 112 may appropriately determine the order, referring to the evaluation value described later.

The evaluation processing unit 118 evaluates the course created by the course creation unit 106.
The time calculation unit 120 calculates time of arrival to the individual shops contained in the preliminary course and the course, when these shops are visited according to the order determined by the order determination unit 112, and course time necessary for visiting round the course. The time calculation unit 120 calculates the travel time between the base and each shop, and between the shops, while optimising the route therebetween.

The time-zone-keepable shop counting unit 122 calculates the number of shops which are characterized by the time of arrival thereto fallen in a zone of the time specification, and are therefore capable of keeping the time specification, among the shops assigned with the time specification, assuming that the shops contained in the preliminary course and the course are visited according to the order determined by the order determination unit 112.

The evaluation value calculation unit 124 calculates an evaluation value for evaluating the course, based on the course time calculated by the time calculation unit 120, and based on the number of shops capable of keeping the time specification calculated by the time-zone-keepable shop counting unit 122.

The evaluation value calculation unit 124 calculates the evaluation value of the course, according to the procedures below.
(1) The course will be given the highest evaluation value if it has the largest number of the shops capable of keeping the time specification.
(2) Upon occurrence of the same number of shops capable of keeping the time specification, respective differences (absolute values) between the times of arrival and the respective assigned times of the shops, which are assigned with the time specification but with the time of arrival out of the time zone, are calculated, and the course having a smaller total value of the differences will be given a higher evaluation value.
(3) Upon occurrence of the same evaluation value with the above procedures, the evaluation value calculation unit 124 gives a higher evaluation value to a course characterized by an earlier time a worker comes back to the base, that is, characterized by a shorter course time.

Alternatively, upon occurrence of the same number of shops capable of keeping the time specification, the time-zone-keepable shop counting unit 122 may be configured to calculate the evaluation value according to the procedures (1) and (2) in the above, by calculating respective differences between the arrival of the times and the respective assigned times of all shops incapable of keeping the time specification, judging a smaller total value of the differences as a larger number of delivery points capable of keeping the time specification, and posting the result of judgment to the evaluation value calculation unit 124.

The improvement processing unit 116 improves the course created by the course refining unit 114. Process for the improvement operations will be described later.

The course is created by the course refining unit 114 according to the procedures below.
First, upon sequential selection of the most highly ranked shops, ranked at "1", by the shop selection unit 108, continued until the predetermined condition is satisfied, the preliminary course creation unit 110 creates a preliminary course which contains the selected shops. The order determination unit 112 determines an order of visiting the shops, according to the time specification of the individual shops contained in the preliminary course. The order determination unit 12 herein may determine the order by aligning the individual shops typically according to an order of the reference time.

Next, the shop selection unit 108 sequentially selects the shops ranked at "2", which is the next rank, until to the predetermined condition is satisfied. In this process, the shops ranked at "2" are characterized by a frequency of delivery lower than that of the shops ranked at "1" contained in the preliminary course. It is therefore necessary for the course refining unit 114 to determine in which week the selected shops should be visited for delivery. The process may be determined by duplicating the preliminary course created by the preliminary course creation unit 110 to produce two courses, one of which being assumed as a first-week course and the other as a second-week course, and by judging which course gives a higher evaluation value of the course when a selected shop is contained therein.

Upon selection of a new shop by the shop selection unit 108, the order determination unit 112 determines in which order the shop should be inserted when the shop is respectively included therein. The order determination unit 112 may determine to which location in each course the selected shop should be inserted, based on the time specification of the shop. Alternatively, in another exemplary case, the order determination unit 112 may determine a location of insertion of a selected shop, also based on the evaluation value determined by the evaluation value calculation unit 124. In this case, the order determination unit 112 first selects a location to which the shop can be inserted, based on the time specification of the individual shops. Next, the order determination unit 112 makes the evaluation value calculation unit 124 calculate the evaluation values for the cases where the shops are respectively inserted to the selected locations. Based on the result, the shop is inserted into one of the locations capable of yielding a higher the evaluation value.

The course refining unit 114 selects one of the courses, capable of yielding a higher evaluation value when evaluated by the evaluation value calculation unit 124 according to the order determined by the order determination unit 112, as a course to which the shop will be added. By repeating the above-described processes, the shops ranked at "2" are selected until the predetermined condition is satisfied, so as to be included into either course.

Next, the shop selection unit 108 sequentially selects the shops ranked at "3", which is the next rank, until the predetermined condition is satisfied. In this process, since the frequency of delivery of the shops ranked at "3" selected by the shop selection unit 108 are same with the frequency of delivery of the shops ranked at "1" contained in the preliminary course, so that the selected shops are to be included in all courses. The order determination unit 112 determines in which order the selected shops should be inserted in each course. Since there is no time specification, the order determination unit 112 herein inserts the shop at a location capable of yielding a higher evaluation value when evaluated by the evaluation value calculation unit 124. By repeating the above-described processes, the shops ranked at 3 are selected until the predetermined condition is satisfied, so as to be included into either course.

Next, the shop selection unit 108 sequentially selects the shops ranked at "4", which is the next rank, until the predetermined condition is satisfied. In this process, the shops ranked at "4" have the frequency of delivery lower than that of the shops ranked at "1" contained in the preliminary course. It is therefore necessary for the course refining unit 114 to determine to which course the selected shop should be included.

Upon selection of a new shop by the shop selection unit 108, the order determination unit 112 determines in which order should the selected shop be inserted in the course, when the shops are respectively inserted to each of two courses. Since there is no time specification, the order determination unit 112 herein inserts the shop at a location capable of yielding a higher evaluation value when evaluated by the evaluation value calculation unit 124. The course refining unit 114 selects one of the courses, capable of yielding a higher evaluation value when calculated by the evaluation value calculation unit 124 according to the order determined by the order determination unit 112, as a course to which the shops should be added. By repeating the above-described processes, the shops ranked at "4" are selected until the predetermined condition is satisfied, so as to be included into either course.

The process will more specifically be explained below.

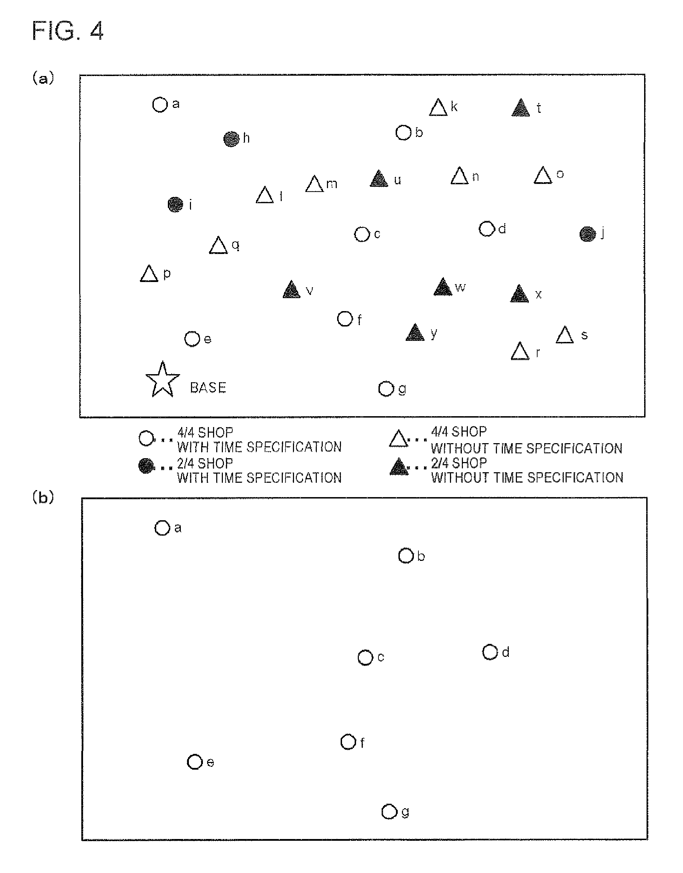

FIGs. 4(a) and 4(b) are drawings illustrating the shops to be included into a course.
FIG. 4(a) is a drawing illustrating the shops ranked at "1" to "4", contained in the shop information storage unit T3 illustrated in FIG. 2. FIG. 4(b) is a drawing illustrating the shops ranked at "1". Symbols given to the individual shops correspond to the shop codes contained in the shop information storage unit T3 in FIG. 2. In the description below, a shop assigned with shop code "a" will be expressed as "shop a".

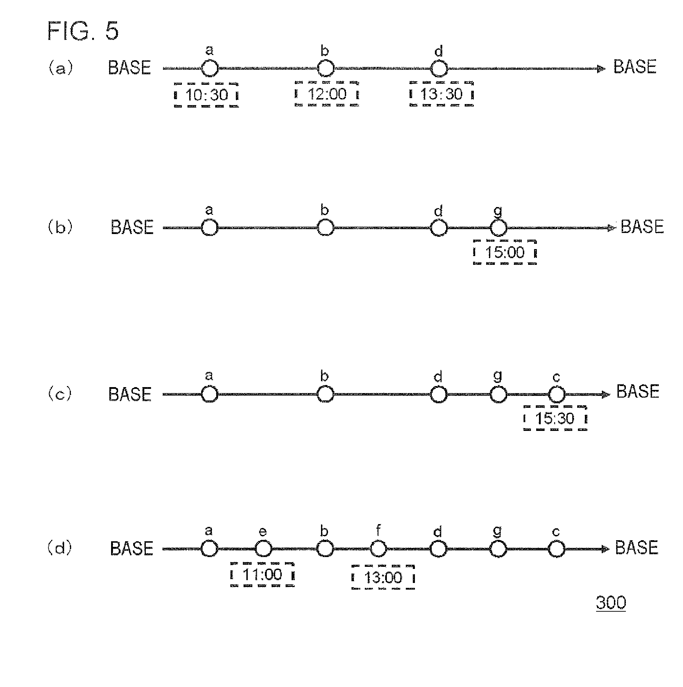

First, the shop selection unit 108 selects the shops "a" to "g" ranked at 1. The preliminary course creation unit 110 creates a preliminary course which contains the shops "a" to "g". Next, the order determination unit 112 determines an order along which the shops selected by the shop selection unit 108 are visited based on the time specification of the individual shops. FIGs. 5(a) to 5(d) are drawings illustrating procedures of determining an order along which the shops are visited, executed by the order determination unit 112. Each numeral surrounded by a broken line represents the reference time of each shop.

First, the order determination unit 112 aligns the shops in increasing order of the assigned time zone, based on the reference time. FIG. 5(a) illustrates a state in which the shops "a", "b" and "d" characterized by a time zone of one hour are selected, and placed in line based on the reference time. The reference time of the shop "a" is 10:30, the reference time of the shop "b" is 12:00, and the reference time of the shop "d" is 13:30, so that the shops are aligned in this order.

Next, the order determination unit 112 selects the shop "g" characterized by a time zone of two hours, which is the second narrowest, and places the shop next to the shop "d" while assuming the reference time as 15:00, as illustrated in FIG. 5(b). Next, the order determination unit 112 selects the shop "c" characterized by a time zone of three hours, which is the next narrowest, and placers the shop next to the shop "g" while assuming the reference time as 15:30, as illustrated in FIG. 5(c).

The shop "e" and the shop "f" are sequentially selected in a similar manner, and the individual shops are aligned in line as illustrated in FIG. 5(d), to thereby create a preliminary course 300.

While the explanation in the above dealt with a case where the order was determined by selecting the shops in such a way that those having narrower assigned time zone of the time specification are selected earlier, it may alternatively be possible to align all shops in line based on their reference times, irrespective of the assigned time zone, and to refine the order typically by exchanging the shops having wider assigned time zones, if the time overlaps.

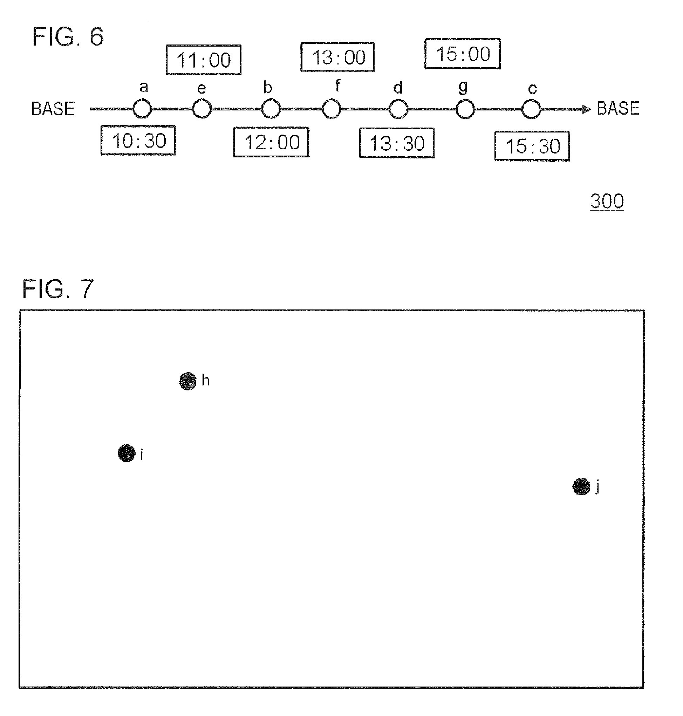

Next, the time calculation unit 120 calculates time of arrival to the individual shops contained in the preliminary course 300, when these shops are visited according to the order determined by the order determination unit 112, and the course time necessary for travelling round the course. FIG. 6 is a drawing illustrating the time of arrival to the individual shops calculated by the time calculation unit 120. In this example, all shops can be visited within the assigned time. Here, numerals surrounded by squares in the drawing represent the time of arrival to the individual shops calculated by the time calculation unit 120.

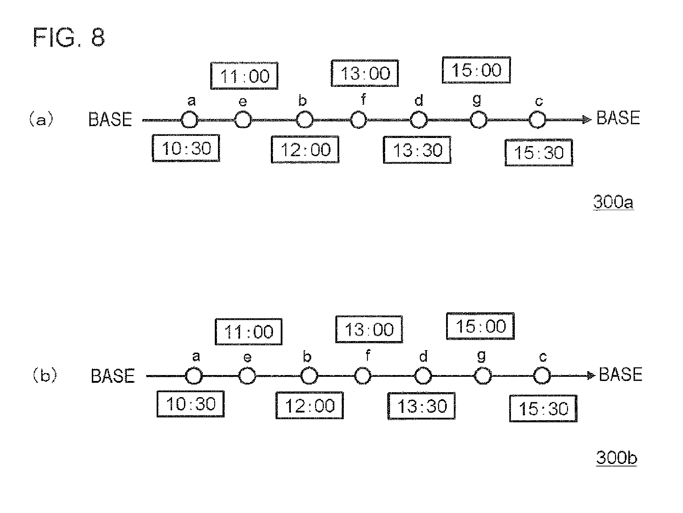

Next, the shop selection unit 108 selects the shops "h" to "j" ranked at "2". FIG. 7 is a drawing illustrating the shops ranked at "2". The frequency of delivery to the shops ranked at "2" is half of the frequency of delivery of the shops ranked at "1". The shops ranked at "2" may therefore be included only once every two rounds of delivery to the shops ranked at "1". The course refining unit 114 therefore duplicates the preliminary course 300 as illustrated in FIGs. 8(a) and 8(b) to thereby create a first duplicated course 300a and a second duplicated course 300b. At this point of time, the first duplicated course 300a and the second duplicated course 300b are same as the preliminary course 300. The first duplicated course 300a herein may be assumed as a first-week course, and the second duplicated course 300b may be assumed as a second-week course.

Next, upon selection of any one shop ranked at 2 by the shop selection unit 108, the course refining unit 114 adds the shop either to the first duplicated course 300a or the second duplicated course 300b. To which course should the shop be added may be determined by the procedures below.

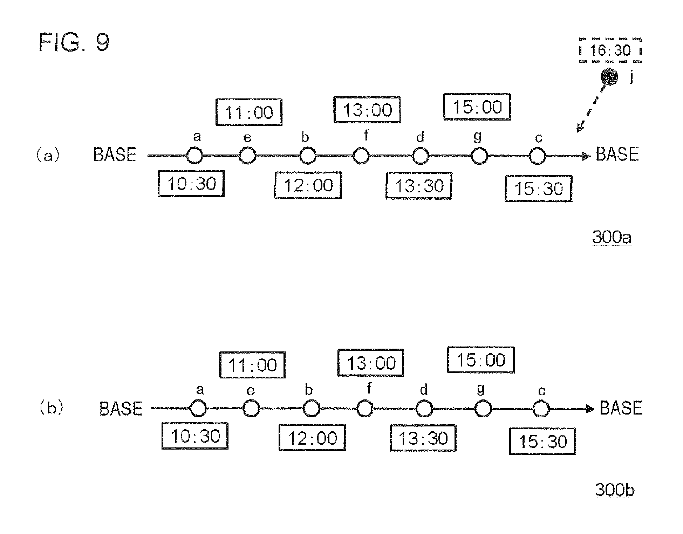

The shop selection unit 108 may select shops from the shops "h" to "j", in increasing order of the assigned time zone. In this example, the shop selection unit 108 selects the shops "j", "i" and "h" in this order. Upon selection of the shop "j" by the shop selection unit 108, the order determination unit 112 determines in which order should the shop "j" be inserted in the course, while giving priority to the time specification of the shop "j". Since the first shop selected first will give the same state as a result of insertion thereof into whichever course of the first duplicated course 300a and the second duplicated course 300b, so that it is inserted into the first duplicated course 300a, for example. To which curse should the first shop be inserted may preliminarily be set, and may be inserted according to the setting. In this example, the shop "j" is inserted next to the shop "c" in the first duplicated course 300a, based on the reference time 16:30 of the shop "j", as illustrated in FIGS. 9(a) and 9(b).

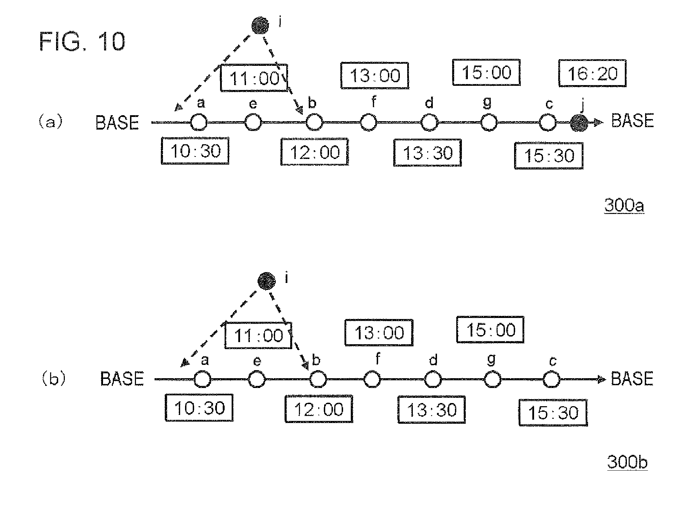

Next, upon selection of the shop "i" by the shop selection unit 108, the order determination unit 112 determines in which order in each course should the shop "i" be inserted, while placing a priority on the time specification of the shop "i". The shop "i" has a reference time of 11:00. However, as illustrated in FIGs. 10(a) and 10(b), both of the first duplicated course 300a and the second duplicated course 300b already contain the shop "e" having the same reference time of 11:00. Accordingly, the order determination unit 112 judges that the shop "i" may be insertable into any location from before the shop "a" to before the shop "b", based on the time of arrivals to the individual shops calculated by the time calculation unit 120, and the zone "10:00 to 12:00" of time specification of the shop "i". The order determination unit 112 then makes the evaluation processing unit 118 calculate the evaluation values for the respective cases where the shop "i" is inserted to each location, and determines insertion of the shop "i" to a location capable of maximizing the evaluation value. The order determination unit 112 executes the process for each of the first duplicated course 300a and the second duplicated course 300b.

The evaluation value of each course is calculated by the procedures below.
For each course, the time calculation unit 120 calculates the time of arrival to the individual shops, and the course time. The time-zone-keepable shop counting unit 122 counts the number of shops which are characterized by the time of arrival thereto fallen in a zone of the time specification, and are therefore capable of keeping the time specification, among the shops assigned with the time specification, based on the time of arrival to the individual shops calculated by the time calculation unit 120, and based on the time specification stored in the shop information storage unit T3. The evaluation value calculation unit 124 gives the highest evaluation value to the case which yields the largest number of shops capable of keeping the time specification. For the case where the same number of shops capable of keeping the time specification occurred, respective differences (absolute values) between the time of arrival and the time specification zone of the shops, which are assigned with the time specification but the time of arrival thereto is out of the time zone, are calculated, and the course having a smaller total value of the differences will be given a higher evaluation value. In this way, even upon occurrence of the same evaluation value, the evaluation value calculation unit 124 gives a higher evaluation value to the course capable of yielding an earlier time a worker comes back to the delivery base, in other words, a shorter course time.

According to the processes described in the above, the order determination unit 112 determines insertion of the shop "i" to a location capable of maximizing the evaluation value, for each of the first duplicated course 300a and the second duplicated course 300b. Next, the course refining unit 114 determines insertion of the shop "i" to either course capable of yielding a higher evaluation value, based on the decision that which of the first duplicated course 300a and the second duplicated course 300b yields a higher evaluation value after being inserted with the shop "i".

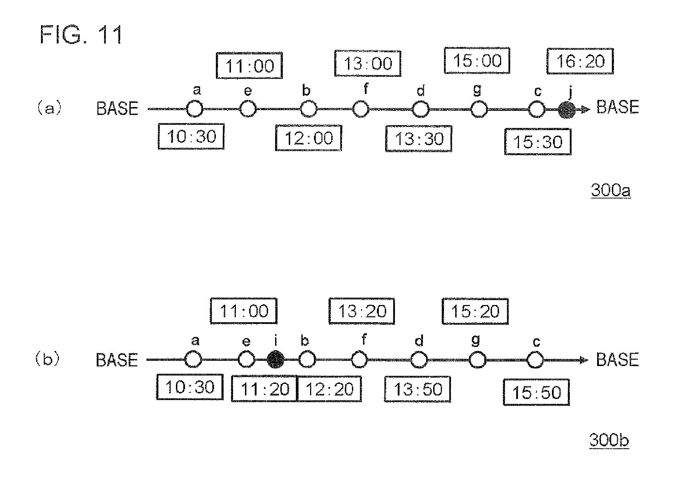

Assuming now that insertion of the shop "i" next to the shop "e" in the second duplicated course 300b, for example, yields the highest evaluation value. In this case, the first duplicated course 300a and the second duplicated course 300b are respectively given as illustrated in FIGs. 11(a) and 11(b). In the second duplicated course 300b, the time of arrivals to the shop "b" and the succeeding shops are delayed, due to insertion of the shop "e".

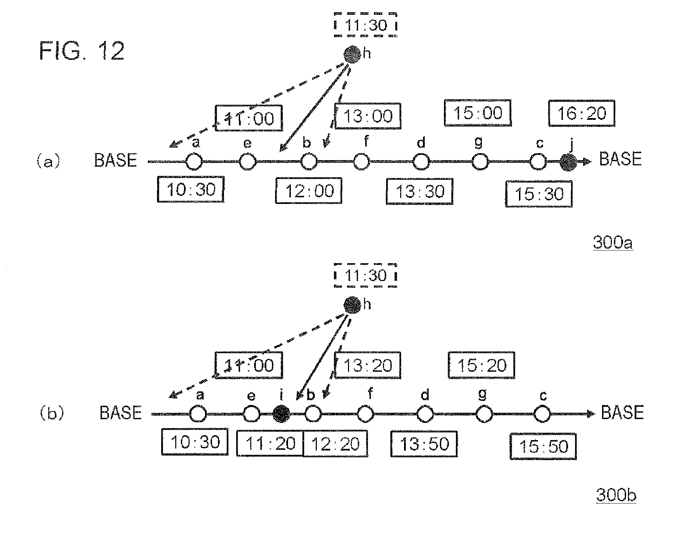

Next, upon selection of the shop "h" by the shop selection unit 108, the order determination unit 112 determines in which order in each course should the shop "h" be inserted, while placing a priority on the time specification of the shop "h". Since the reference time of the shop "h" is 11:30 as illustrated in FIGs. 12 (a) and 12(b), it may be allowable for the order determination unit 112 to add the shop "h" typically between the shop "e" and the shop "b". The order determination unit 112 may alternatively select a plurality of locations to which the shop "h" is insertable, based on the time of arrival to the individual shops calculated by the time calculation unit 120, and the zone "10:00 to 13:00" of time specification of the shop "h", and may determine insertion of the shop "h" to a location capable of yielding the highest evaluation value, based on the evaluation value evaluated by the evaluation processing unit 118 for the cases where the shop "h" is respectively inserted to each of the locations. The order determination unit 112 executes the process for each of the first duplicated course 300a and second duplicated course 300b.

Next, the course refining unit 114 determines insertion of the shop "h" to either course capable of yielding a higher evaluation value, based on a decision about which of the first duplicated course 300a and the second duplicated course 300b yields a higher evaluation value after being inserted with the shop "h".

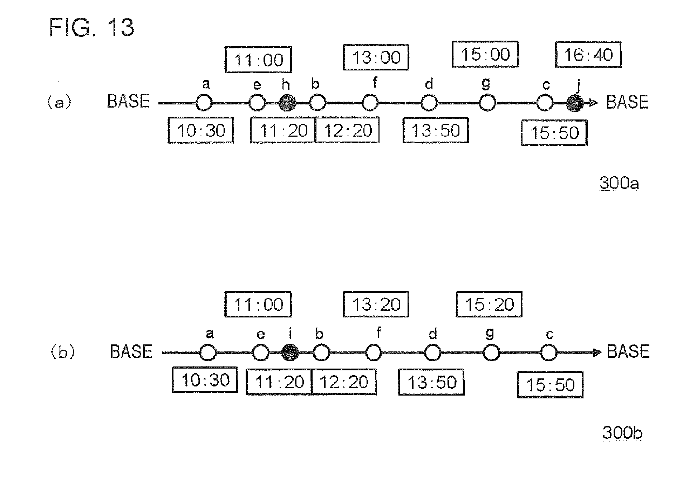

Assuming now that an exemplary case where the shop "h" is inserted next to the shop "e" in the first duplicated course 300a yields the highest evaluation value. In this case, the first duplicated course 300a and the second duplicated course 300b are respectively given as illustrated in FIGs. 13 (a) and 13(b). In the first duplicated course 300a, the time of arrivals to the shop "b" and the succeeding shops are delayed, due to insertion of the shop "h". In this way, selection of the shops up to those ranked at "2" completes.

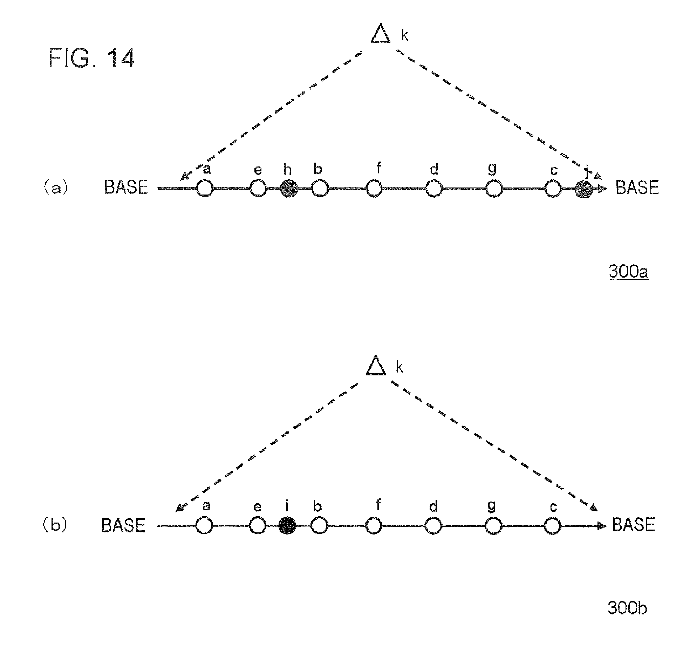

Next, the shop selection unit 108 sequentially selects the shops ranked at "3", from the shops illustrated in FIG. 4(a). In this process, the frequency of delivery of the shops ranked at "3" are same as the frequency of delivery of the shops ranked at 1. Accordingly, the shops ranked at "3" are designed to be included respectively in both of the first duplicated course 300a and the second duplicated course 300b. FIGs. 14 (a) and 14(b) is a drawing illustrating an exemplary case where the shop "k" ranked at "3" is selected. Since the shops ranked at "3" have no time specification, so that they may be insertable at any location as illustrated in FIGS. 14(a) and 14(b). Upon selection of any one shop ranked at "3" by the shop selection unit 108, the order determination unit 112 determines a location where the shop is added, based on a decision about which location in the first duplicated course 300a and the second duplicated course 300b yields the highest evaluation value after being respectively inserted with the shop.

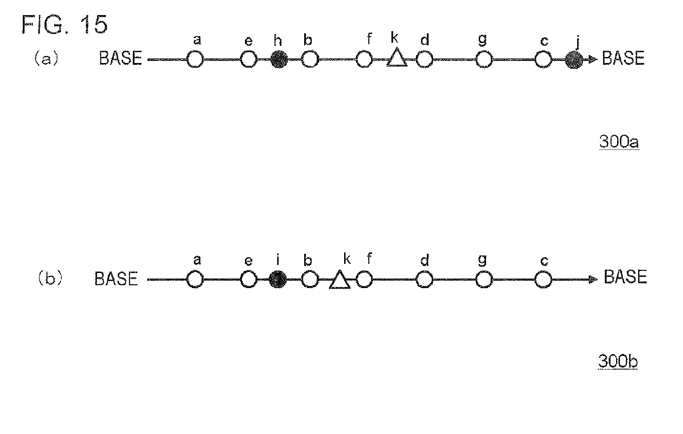

FIGs. 15(a) and 15(b) are drawings illustrating states of addition of the shop "k" respectively to the first duplicated course 300a and the second duplicated course 300b.

Upon completion of addition of the shops ranked at "3", the shop selection unit 108 then sequentially selects the shops ranked at "4" from the shops illustrated in FIG. 4(a). In this process, the frequency of delivery of the shops ranked at "4" is half of the frequency of delivery of the shops ranked at "1". Accordingly, it may be good enough for the shops ranked at "4" to be included once every two rounds of delivery to the shops ranked at "1". Upon selection of any one of the shops ranked at "4" by the shop selection unit 108, the course refining unit 114 adds the shop either to the first duplicated course 300a or the second duplicated course 300b.

Upon selection of any one shop from those ranked at "4" by the shop selection unit 108, the order determination unit 112 determines a location where the shop is added, based on a decision about which location in the first duplicated course 300a and the second duplicated course 300b yields the highest evaluation value after being respectively inserted with the shop.

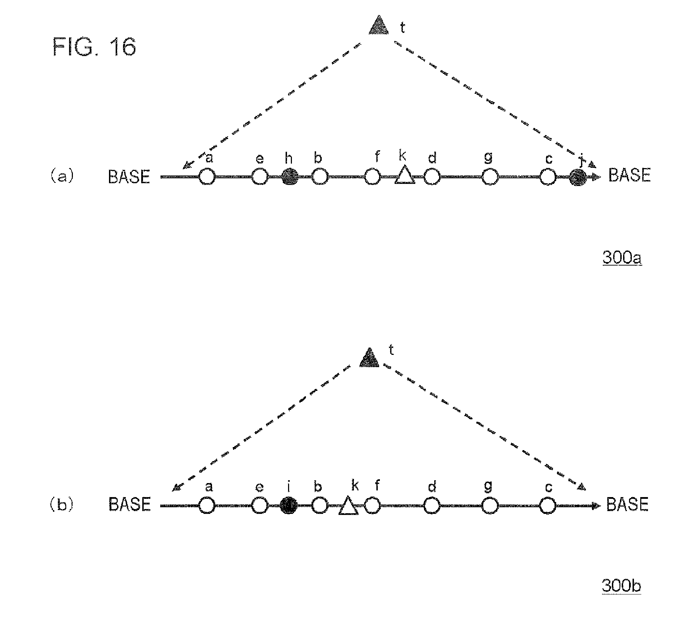

FIGs. 16(a) and 16(b) are drawings illustrating an exemplary case where the shop "t" ranked at "4" is selected. Note that, for the sake of simplicity, the shops ranked at "3" is represented only by the shop "k", although the shops "k" to "s" ranked at "3", set by the shop information storage unit T3, have already been incorporated into the first duplicated course 300a and the second duplicated course 300b. The shops ranked at "4", having no time specification, may be insertable to any location as illustrated in FIGs. 16(a) and 16(b). Upon selection of any one shop ranked at "4" by the shop selection unit 108, the order determination unit 112 determines a location where the shop is added, based on a decision about which location in the first duplicated course 300a and the second duplicated course 300b yields the highest evaluation value after being respectively inserted with the shop.

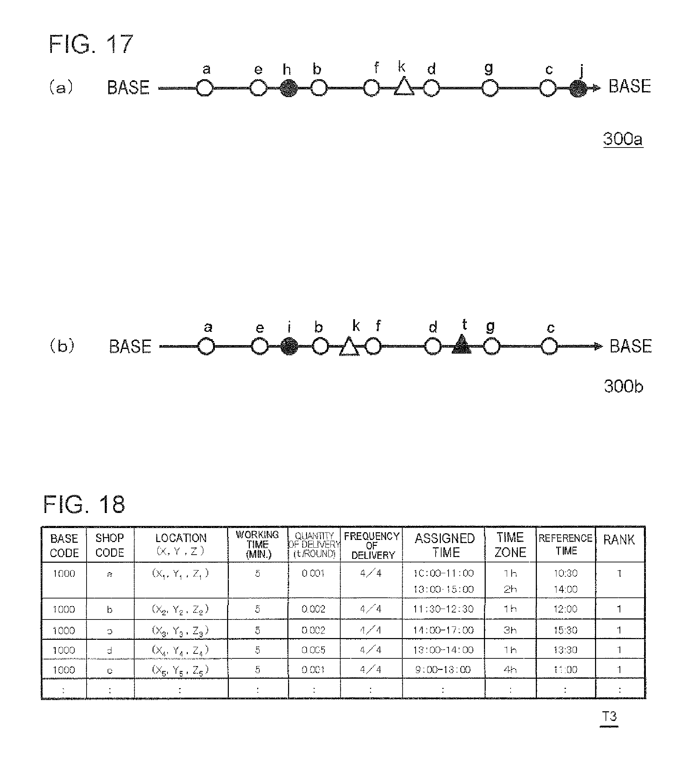

Thereafter, the course refining unit 114 determines to which course should the shop "t" be added, based on a decision about which of the first duplicated course 300a and the second duplicated course 300b yields a higher evaluation value after being inserted with the shop "t". FIGs. 17(a) and 17(b) are drawings illustrating an exemplary state of addition of the shop "t" to the second duplicated course 300b. The shop selection unit 108 sequentially selects the shops ranked at "4" until a predetermined condition is satisfied, and the order determination unit 112 determines to which location in each course should the shop be added, every time the shop selection unit 108 selects the shop, and the course refining unit 114 decides to which course should the shop be added, to thereby create the course.
The course is thus creased by the processes described in the above.

While the example described in the above relates to a case where each shop is assigned with only one delivery time, each shop may alternatively be assigned with two or more separate delivery times. FIG. 18 is a drawing illustrating a configuration of the shop information storage unit T3 containing the shops thus assigned.

The shop "a" herein is assigned with time specifications specified by two time zones of "10:00 to 11:00" and "13:00 to 15:00". This means that the delivery may be acceptable in either of two above-described time zones. In this case, the order determination unit 112 handles each of both time specifications as the time specification of the shop, and determines either one of which, capable of yielding the highest evaluation value when calculated by the evaluation value calculation unit 124, as a representative of the time specification of the shop.

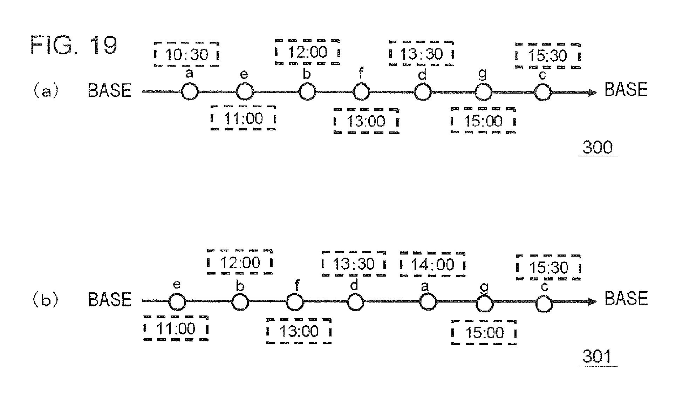

FIGs. 19(a) and 19(b) are drawings illustrating an exemplary preliminary course.
The preliminary course 300 illustrated in FIG. 19(a) relates to an exemplary case where the time specification of the shop "a" is assumed as 10:30, which is the reference time of the zone "10:00 to 11:00", similarly as explained referring to FIGs. 5 (a) to 5(d). The preliminary course 301 illustrated in FIG. 19(b) relates to an exemplary case where the time specification of the shop "a" is assumed as 14:00, which is the reference time of the zone "13:00 to 15:00". In this embodiment, for the case where a plurality of time specifications are assigned as described in the above, the shop is assumed to have the respective time specifications assigned thereto, thereby a course is respectively created for each of the cases, and either one of the courses capable of yielding the higher evaluation value as a result of evaluation by the evaluation value calculation unit 124 may be adopted. In other words, a duplicated course is created also for the preliminary course 301, by the process similar to that explained with respect to the preliminary course 300 referring to FIG. 6 to FIGs. 17(a) and 17(b), and either one of the cases using the preliminary course 300 and the preliminary course 301, capable of yielding the higher evaluation value of the course, may be adoptable.

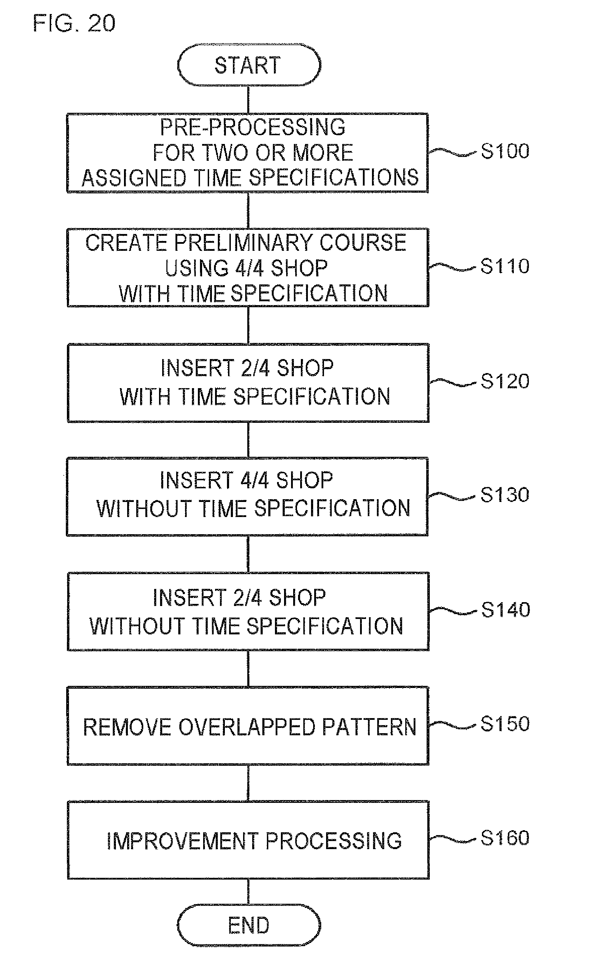

FIG. 20 is a flow chart illustrating procedures of the above-described process.
First, for the case where a plurality of time specifications are assigned, the individual cases are categorized as described in the above (S100). The processes thereafter are executed for each case.

First, the 4/4 shops assigned with the time specification and characterized by the highest frequency of delivery are selected, so as to create a preliminary course (S110).

Next, the 2/4 shops assigned with the time specification and characterized by the next highest frequency of delivery are inserted (S120). The 2/4 shops herein are characterized by the frequency of delivery which is half of that of the 4/4 shops, so that it may be good enough for the 2/4 shops to be visited once every two rounds of delivery to the 4/4 shops. Accordingly, the preliminary course created in step S110 is duplicated to produce two duplicated courses, and the 2/4 shops are sequentially inserted while determining in which courses should the shops be included.

Thereafter, the 4/4 shops not assigned with the time specification and characterized by a high frequency of delivery are selected and sequentially inserted into the duplicated courses (S130). The shops herein are characterized by the frequency of delivery same as that of the 4/4 shops assigned with the time specification and selected in step S110, and are necessarily included into all duplicated courses, where the location of insertion into each course is determined so that a higher evaluation value may be obtained.

The 2/4 shops having no time specification and characterized by a low frequency of delivery are then selected, and sequentially inserted into the duplicated courses (S140). Since the frequency of delivery in this case is low, to which duplicated course created in step S120 should the shops be added is determined, so as to obtain a higher evaluation value. Thereafter, among the duplicated courses, any of those having an identical pattern is deleted (S150). This is a measure for avoiding overlapping in the improvement operations thereafter. The improvement operations described later are then executed (S160).

Note that in the aforementioned process, for the case where two or more delivery times are assigned typically as explained referring to FIG. 18, the shop capable of keeping either of the time specifications may be calculated as the shop capable of keeping the time specification. Also in the process of calculating the difference of time, the smallest value of difference of time obtained with respect to any one of the time specifications may be adoptable as a representative of the difference of time with respect to the assigned time of this shop.

### (Improvement Operations)

Next, improvement operations by the improvement processing unit 116 will be explained.
The improvement processing unit 116 repeats a process of creating an improvement candidate course in which the order of visiting of the shops contained in the course created by the course refining unit 114 is modified, judging whether the evaluation value calculated by the revaluation value calculation unit 124 increases or not, and if it increases, determining the improvement candidate course as the improved course.

### (First Improvement Operation: Reversion)

More specifically, the improvement processing unit 116 creates an improvement candidate course by reversing the order of shops contained in the course created by the course refining unit 114, from the order determined by the order determination unit 112. In this operation, for the case where two or more delivery times are assigned typically as explained referring to FIGs. 18(a) and 18 (b), the shop capable of keeping either of the time specifications may be calculated as the shop capable of keeping the time specification. Also in the process of calculating the difference of time, the smallest value of difference of time obtained with respect to any of the time specifications may be adoptable as a representative of the difference of time with respect to the assigned time of this shop. With this process, if the order of the shops contained in the course created by the course refining unit 114 is reversed from the order determined by the order determination unit 112, there is a possibility that some shop may be turned visitable in the assigned time zone different from the time specification initially adopted, and the evaluation value may be elevated as a consequence. The same will apply also to the other improvements described below.

### (Second Improvement Operations: Exchange of Insertion)

The improvement processing unit 116 selects one or more shops which align according to the order determined by the order determination unit 112, from the course created by the course refining unit 114, and inserts the selected shop (s) between the other shops contained in the course so as to maximize the evaluation value when calculated by the evaluation value calculation unit 124, to thereby create an improvement candidate course.

### (Third Improvement Operation: Point-to-Point Exchange)

The improvement processing unit 116 exchanges the shop contained in the course created by the course refining unit 114 with each of other shops contained in the same course, so as to maximize the evaluation value when calculated by the evaluation value calculation unit 124, to thereby create an improvement candidate course.

### (Fourth Improvement Operation: Week Order Exchange)

The improvement processing unit 116 relocates the shops characterized by low frequencies of delivery into a course different from the course currently selected, to thereby create an improvement candidate course.

In all of these cases, the evaluation value calculation unit 124 evaluates the improvement candidate course by the procedures below.
(i): The improvement candidate course is adopted when the improvement candidate course and the current course are compared, and if the improvement candidate course is found to yield the smaller number of shops assigned with the time specifications but with the time of arrival out of the time zone, based on the respective totals of two courses (first week and second week).
(ii): Even if the numbers are same under condition (i), the improvement candidate course is adopted when the difference of time (absolute value) between the time of arrival and the assigned time zone is calculated for all shops assigned with the time specification but out of the specified zone, and if the improvement candidate course is found to yield the smaller total of difference of time based on the respective totals of two courses.
(iii): Even if the numbers are same under conditions (i) and (ii), the improvement candidate course is adopted, if the improvement candidate course is found to yield the earlier time a worker comes back to the delivery base (course time) based on the respective totals of two courses.

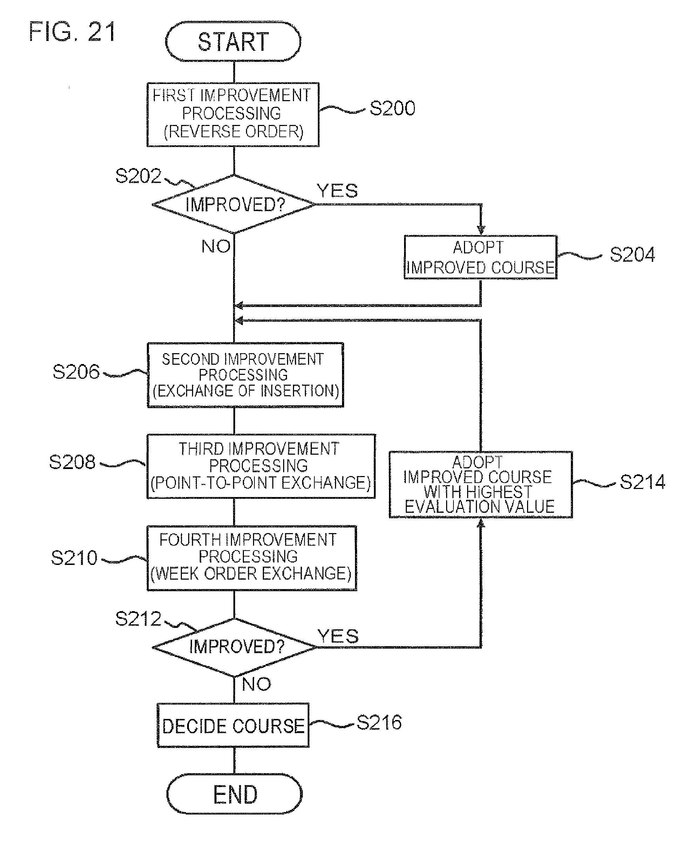

FIG. 21 is a flow chart illustrating procedures of the operation by the improvement processing unit 116.
The first improvement is executed (S200). In this process, if the evaluation value of the improvement candidate course is found to be higher (YES in S202), the improvement candidate course is determined as the improved course, and then adopted (S204). If the evaluation value of the improvement candidate course is not found to elevate but to remain unimproved (NO in S202), the original course is kept.

Next, the second improvement operation (S206), the third improvement operation (S208), and the fourth improvement operation (S210) are respectively executed. These operations may be executed in parallel, or may arbitrarily be selected and partially be executed. Whichever the case may be, the evaluation value of the improvement candidate course is calculated, and if the value is found to be improved (YES in S212), the improvement candidate course which yields the highest evaluation value is determined as an improved course, and adopted (S214). The improvement operation is repeated, and terminated if further improvement is found to be no more achievable (NO in S212), and thereby the course is determined (S216).

Next, specific examples of the individual improvement operations will be explained.

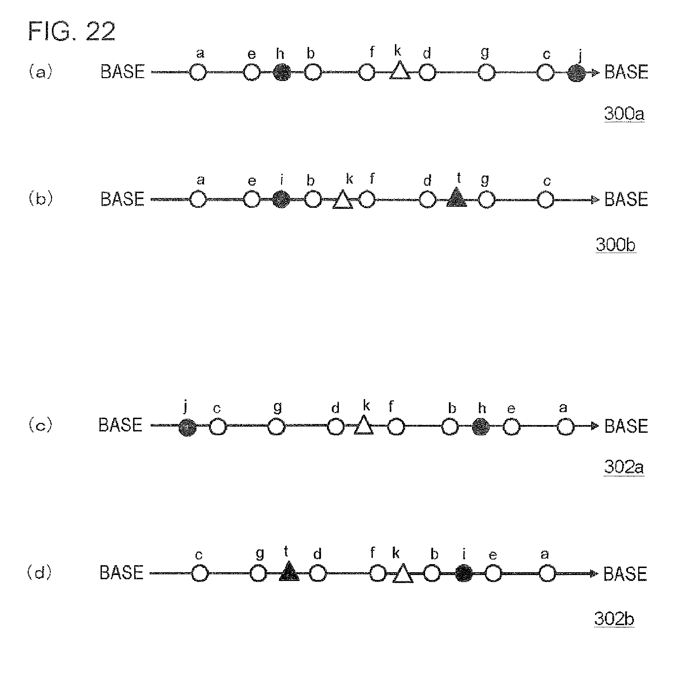

FIGs. 22(a) to 22(d) are drawings illustrating the first improvement operation.
FIG. 22(a) and FIG. 22(b) are drawings respectively illustrating the first duplicated course 300a and the second duplicated course 300b created by the course refining unit 114, previously explained referring to FIG. 5 to FIGs. 17(a) and 17(b). Now the order of visiting of all shops is respectively reversed on the trial basis, with respect to the first duplicated course 300a and the second duplicated course 300b.

FIG. 22 (c) is a drawing illustrating an improvement candidate course 302a, obtained by reversing the order of visiting in the first duplicated course 300a. The evaluation value for this case is calculated by the evaluation processing unit 118, and if the evaluation value is found to be larger than that of the first duplicated course 300a, the improvement candidate course 302a is adopted as the improved course of the first duplicated course 300a.

FIG. 22 (d) is a drawing illustrating an improvement candidate course 302b, obtained by reversing the order of visiting in the second duplicated course 300b. The evaluation value for this case is calculated by the evaluation processing unit 118, and if the evaluation value is found to be larger than that of the second duplicated course 300b, the improvement candidate course 302b is adopted as the improved course of the second duplicated course 300b.

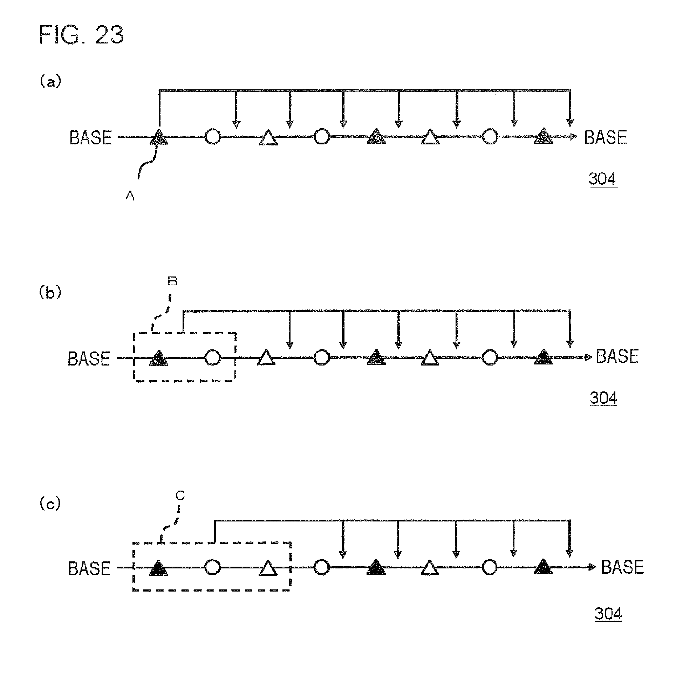

FIGs. 23 (a) to 23 (c) are drawings explaining operations of the second improvement operation.
FIG. 23(a) is a drawing illustrating an exemplary operation of selecting one shop and inserting it between other shops. Now the shop "a" is inserted to all locations indicated by arrows on the trial basis, the evaluation value is calculated by the evaluation processing unit 118 for each case, and the case capable of yielding the highest evaluation value is adopted as the improvement candidate course. If the evaluation value of the improvement candidate course is found to be higher than that of the original course, the improvement candidate course is adopted as the improved course.

FIG. 23(b) is a drawing illustrating an exemplary operation of selecting two shops and inserting them between other shops. Now two shops surrounded by broken line B are inserted to all locations indicated by arrows on the trial basis, the evaluation value is calculated by the evaluation processing unit 118 for each case, and the case capable of yielding the highest evaluation value is adopted as the improvement candidate course. If the evaluation value of the improvement candidate course is found to be higher than that of the original course, the improvement candidate course is adopted as the improved course.

FIG. 23(c) is a drawing illustrating an exemplary operation of selecting three shops and inserting them between other shops. Now three shops surrounded by broken line C are inserted to all locations indicated by arrows on the trial basis, the evaluation value is calculated by the evaluation processing unit 118 for each case, and the case capable of yielding the highest evaluation value is adopted as the improvement candidate course. If the evaluation value of the improvement candidate course is found to be higher than that of the original course, the improvement candidate course is adopted as the improved course.

Similarly, typically by increasing the number of shops to be selected, the evaluation value is calculated in various cases, and the case capable of yielding the highest evaluation value is adopted as the improvement candidate course. If the evaluation value of the improvement candidate course is found to be higher than that of the original course, the operation of adopting improvement candidate course as the improved course is repeated.

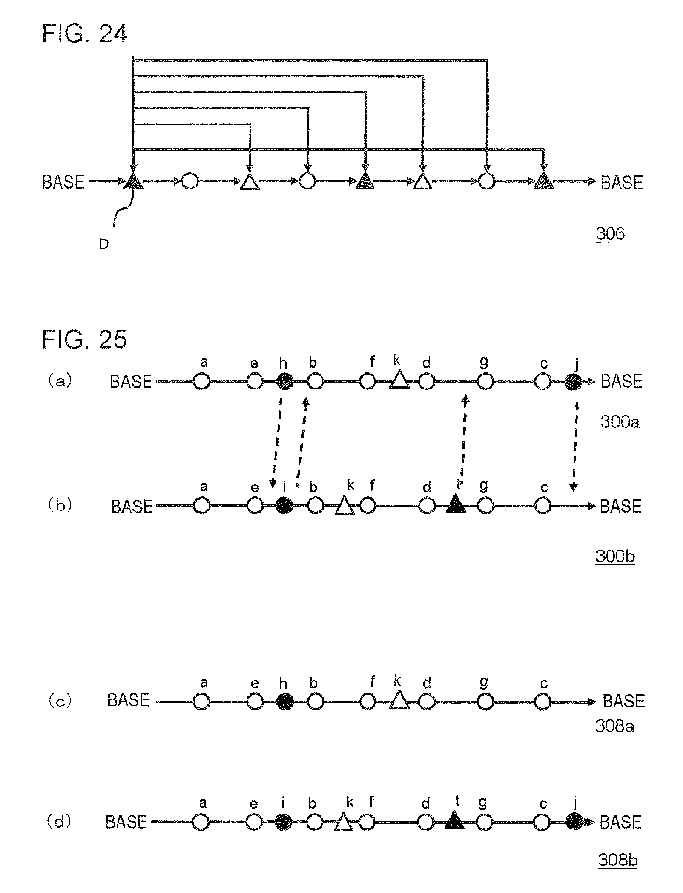

FIG. 24 is a drawing explaining the third improvement operation.
Now the shop "D" is selected, and all shops pointed by arrows are respectively replaced with the shop "D". The evaluation value is calculated by the evaluation processing unit 118 for each case, and the case capable of yielding the highest evaluation value is adopted as the improvement candidate course. If the evaluation value of the improvement candidate course is found to be higher than that of the original course, the improvement candidate course is adopted as the improved course. Replacement of the shop "D" with the adjacent shop may be omissible, since the operation gives the same result with the second improvement operation.

FIGs. 25(a) to 25(d) are drawings explaining the fourth improvement operation.
As illustrated in FIG. 25 (a) and FIG. 25(b), out of the first duplicated course 300a and the second duplicated course 300b created by the course refining unit 114 as explained referring to FIG. 5 to FIGs. 17 (a) and 17(b), the shop "h", the shop "j", the shop "i", and the shop "t", characterized by a low frequency of delivery are respectively relocated into the other course on the trial basis. The evaluation value is calculated by the evaluation processing unit 118 for each case. If the evaluation value is found to be higher than that of the original course, the relocated course is adopted as the improved course. FIG. 25(c) and FIG. 25(d) are drawings respectively illustrating improved course 308a and the improved course 308b, obtained by moving the shop "j", which was contained in the first duplicated course 300a before the improvement, into the second duplicated course 300b.

According to course creation system 100 of this embodiment, a course, which contains a plurality of delivery points characterized by different frequencies of delivery and assigned with or without time specification, may be created, so that the delivery points assigned with the time specification may be visited in a highly punctual and efficient manner.

The individual constituents of the course creation system 100 illustrated in FIG. 1 represent blocks on the functional basis, rather than on the hardware basis. The individual constituents of the course creation system 100 may be embodied by arbitrary combinations of software and hardware, typically represented by CPU of arbitrary computer, memory, program which embodies the constituents in this drawing loaded on the memory, memory unit such as hard disk which stores the program, and so forth. Those skilled in the art may readily understand that methods and devices for embodying the combinations may be modified in various ways.

The present invention has been explained making reference to embodiments. All embodiments are merely illustrative, and those skilled in the art will readily understand that combinations of the individual constituents and processes may be modified in various ways, and that also such modifications are within the scope of the present invention.

### (Shuttle Operation)

The embodiments in the above have explained the case in which the worker departs from the delivery base in the morning, visits a plurality of shops (delivery points) to deliver the commodities, and comes back to the delivery base in the evening. However, there may be a case where all commodities scheduled to deliver in one day cannot be loaded on a truck depending on the quantity of delivery of the commodities. In this case, it may be necessary to create a course (shuttle course) according to which the worker once goes back to the base, depending on a loadable quantity of commodity, reloads the commodities, and again visits the shops.

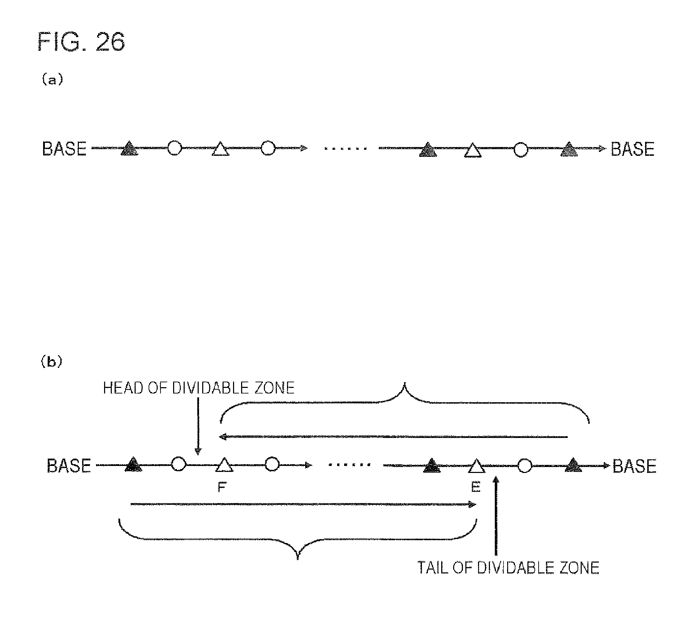

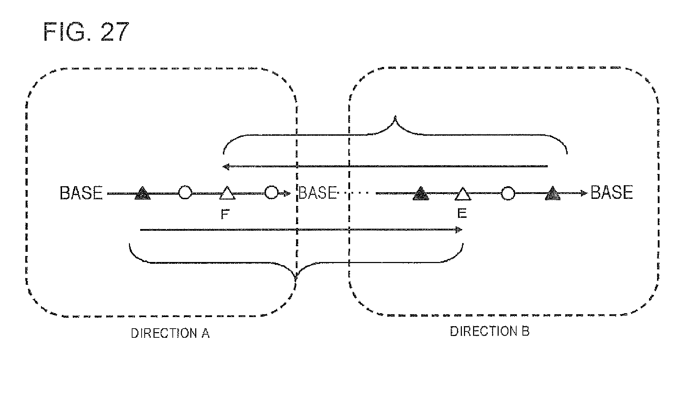

FIGs. 26(a) and 26(b) and FIG. 27 are drawings illustrating an example of this case of creating a shuttle course.
First, irrespective of the quantity of delivery, a course similar to the first duplicated course 300a or the second duplicated course 300b is created, similarly as described in the above. An exemplary course is shown in FIG. 26 (a). After the course is created in this way, the shops up to which the quantity of commodity does not exceed the loadable quantity are detected respectively for the normal order and the reversed order. It is assumed now that, as illustrated in FIG. 26(b), the shop "E" is the furthest shop up to which the quantity of commodity does not exceed the loadable quantity in the normal order, whereas the shop "F" is the furthest shop up to which the quantity of commodity does not exceed the loadable quantity in the reverse order. In other words, by dividing the course at any point between the shop "F" and the shop "E" in the normal order, the quantity of commodities to be delivered to the shops contained in each course may be adjusted so as not to exceed the loadable quantity of commodity.

The course herein may be divided at a position between any of these shops capable of yielding the highest evaluation value. FIG. 27 is a drawing illustrating an exemplary case where the course is divided into two courses for direction "A" and direction "B", to thereby create shuttle courses.

While the above-described embodiments took only the time specification of the individual shops into consideration, it may be necessary in practice to consider rest time of the worker. In addition, some shops may have not only assigned time for delivery, but also unavailable time period for delivery. If the time of arrival to the shop falls in the unavailable time period for delivery, time adjustment may be necessary and typically so as to halt the delivery to the shop until the unavailable time period elapses. The time calculation unit 120 may calculate the time taking this sort of time period into consideration.

While the above-described embodiments explained exemplary cases where the course containing the 4/4 shops and the 2/4 shops is created, the course may alternatively contain also, for example, 1/4 shops (shops in need of delivery once every four weeks). In order to add this sort of shops into the course, the preliminary course 300 is duplicated twice into four courses, similarly to the process of duplicating the preliminary course 300 described referring to FIG. 8, wherein the course to which the shops are inserted, and the order thereof may be determined, based on a finding that which course will be capable of yielding the highest evaluation value as a result of addition of the shop.

The above-described embodiments explained exemplary cases where the course is created while the shops to be included therein are preliminarily set. However, in some cases, there may be a larger number of shops, the shops to be included in the individual courses may not preliminarily be set, and it may therefore necessary to select, from these shops, those to be included in the course. In this case, it may be necessary to create the course by selecting the shops, while adjusting the course time, which represents the total time the worker departs from the base, delivers the commodities to the shops and comes back to the base, within a certain range of time, and while adjusting the total quantity of commodity to be delivered to the individual shops within a certain range of quantity. In this case, for example, for every rank, up to how many percent of values, set as the upper limit of the course time or the upper limit of the total quantity of commodity, the shops of a certain rank can occupy may be set in advance, and attainment of that value may be defined as a predetermined condition. For example, if the shops ranked at 1 are selected up to the upper limit of the course time or the upper limit of the total quantity of commodity is reached, the course no longer possible to contain the shops ranked at lower levels. However, by preliminarily setting the predetermined condition for every level, the course is now able to contain the shops under various conditions in a well-balanced manner. In addition, in this case, the shop selection unit 108 may be configured to sequentially select the shops, typically based on information on location of the base, information on location of the individual shops, quantity of delivery of commodities to the individual shops, and so forth.

## Claims

1. A system of creating a course of delivery of commodities to a plurality of types of a plurality of delivery points **characterized by** different frequencies of delivery necessarily be done in a predetermined period, and assigned with or without time specification which indicates an acceptable time of delivery, comprising:
a delivery point selection unit which ranks up said individual delivery points depending on presence or absence of said time specification, and on said frequencies of delivery, assuming the presence of time specification as the first priority condition, and the highness of frequency of delivery as the second priority condition; and repeats a processes of sequentially selecting said delivery points, firstly from said delivery points with higher rank until a predetermined condition is satisfied, and, once the predetermined condition of said delivery points with said higher rank is satisfied, next from said delivery points with next higher rank;
an order determination unit which determines an order of visiting said delivery points selected by said delivery point selection unit;
a time calculation unit which calculates a time of arrival to each of said delivery points, when said delivery points selected by said delivery point selection unit are visited according to the order determined by said order determination unit;
an evaluation value calculation unit which calculates an evaluation value of a course, in such a way that a course which contains a larger number of delivery points supposed to be highly punctual about the time specification, among the delivery points assigned with the time specification, is given a higher evaluation value, based on said time of arrival calculated by said time calculation unit;
a preliminary course creation unit which creates, upon selection of said delivery points with the most highest rank made by said delivery point selection unit until said predetermined conditions are satisfied, a preliminary course along which said delivery points are visited according to the order determined by said order determination unit; and
a course refining unit which creates a course by sequentially adding, to said preliminary course created by said preliminary course creation unit, delivery points selected thereafter by said delivery point selection unit,
said order determination unit determines an order of said delivery points contained in said preliminary course, according to said time specification of each of said delivery points, and, after said preliminary course is created, when said delivery point selection unit selects a delivery point not assigned with any time specifications, inserts said delivery point to an location of order capable of maximizing said evaluation value of the course calculated by said evaluation value calculation unit.

2. The course creation system as claimed in Claim 1,
wherein, when said delivery point selection unit selects a delivery point with a low frequency of delivery rank, said course refining unit repeats a process of making said evaluation value calculation unit calculate said evaluation values for the respective cases when said delivery point with the low frequency of delivery rank is inserted respectively in the courses each of along which said commodities are delivered to said delivery points with higher frequency of delivery rank, and of inserting said delivery point with the low frequency of delivery rank into a course capable of yielding a higher evaluation value.

3. The course creation system as claimed in Claim 1 or 2, further comprising:
a time-zone-keepable shop counting unit which counts, based on said time of arrival calculated by said time calculation unit, the number of delivery points which are **characterized by** the time of arrival thereto fallen in a zone of the time specification, and are therefore capable of keeping said time specification, among all delivery points assigned with the time specification, and
said evaluation value calculation unit calculates a higher evaluation value for a course which contains a larger number of delivery points capable of keeping said time specification calculated by said time-zone-keepable shop counting unit.

4. The course creation system as claimed in Claim 3,
wherein, upon occurrence of the same number of said delivery points capable of keeping said time specification, said time-zone-keepable shop counting unit calculates respective differences between the time specification and the respective times of arrival of all delivery points incapable of keeping said time specification, and judges that a smaller total value of the differences means a larger number of delivery points capable of keeping said time specification.

5. The course creation system as claimed in any one of Claims 1 to 4,
wherein said time calculation unit also calculates a total time necessary for visiting all of said delivery points selected by said delivery point selection unit, when said delivery points are visited according to the order determined by said order determination unit, and
upon occurrence of the same number of said delivery points supposed to be highly punctual about said time specification, said evaluation value calculation unit calculates a higher evaluation value corresponding to a shorter total time calculated by said time calculation unit.

6. The course creation system as claimed in any one of Claims 1 to 5,
wherein, upon creation of said preliminary course by said preliminary course creation unit, and upon selection of a delivery point assigned with the time specification by said delivery point selection unit, said order determination unit selects locations where said delivery point is insertable based on the time specification of its own, makes said evaluation value calculation unit calculate said evaluation values for respective cases where said delivery point is inserted to the respective locations, and inserts said delivery point into one of the locations capable of maximizing said evaluation value.

7. The course creation system as claimed in any one of Claims 1 to 6,
wherein, for the case where a delivery point is assigned with two or more separate time specifications, said order determination unit respectively handles all of said time specifications as the time specification of said delivery point, and determines a time specification, capable of maximizing said evaluation value calculated by said evaluation value calculation unit, with respect to the individual conditions, as the time specification of said delivery point.

8. The course creation system as claimed in any one of Claims 1 to 7, further comprising:
an improvement processing unit which repeats an operation that includes creating an improvement candidate course **characterized by** a modified order of visiting of said delivery points contained in said course created by said course refining unit, judging whether said evaluation value calculated by said evaluation value calculation unit goes higher or not, and if goes higher, defining said improvement candidate course as an improved course.

9. The course creation system as claimed in Claim 8,
wherein said improvement processing unit creates said improvement candidate course by aligning said delivery points contained in said course created by said course refining unit, according to an order reversed from the order determined by said order determination unit.

10. The course creation system as claimed in Claim 8 or 9,
wherein said improvement processing unit replaces said delivery points contained in said course created by said course refining unit, respectively with each of other delivery points contained in said course, and creates said improvement candidate course by making replacement capable of maximizing said evaluation value calculated by said evaluation value calculation unit.

11. The course creation system as claimed in any one of Claims 8 to 10,
wherein said improvement processing unit selects one or more of said delivery points aligned in line according to the order determined by said order determination unit, from said course created by said course refining unit, inserts said delivery point (s) between other delivery points contained in said course, and creates said improvement candidate course by making replacement capable of maximizing said evaluation value calculated by said evaluation value calculation unit.

12. The course creation system as claimed in any one of Claims 8 to 11,
wherein said improvement processing unit creates said improvement candidate course by moving a delivery point ranked at a lower frequency of delivery, into a course different from the currently-selected course.

13. A method of creating a course of delivery of commodities to a plurality of types of a plurality of delivery points **characterized by** different frequencies of delivery necessarily be done in a predetermined period, and assigned with or without time specification which indicates an acceptable time of delivery, comprising:
a step of repeating a process of ranking up said individual delivery points depending on presence or absence of said time specification, and on said frequencies of delivery, assuming the presence of time specification as the first priority condition, and the highness of frequency of delivery as the second priority condition; and repeating a processes of sequentially selecting said delivery points, firstly from said delivery points with higher rank until a predetermined condition is satisfied, and, once the predetermined condition of said delivery points with said higher rank is satisfied, next from said delivery points with next higher rank;
a step of determining an order of visiting said delivery points selected in the step of sequentially selecting said delivery points;
a step of calculating a time of arrival to each of said delivery points, when said delivery points are visited according to the order determined in said step of determining the order of visiting said delivery points;
a step of calculating an evaluation value of a course, in such a way that a course which contains a larger number of delivery points supposed to be highly punctual about the time specification, among the delivery points assigned with the time specification, is given a higher evaluation value, based on said time of arrival calculated in said step of calculating said time of arrival;
a step of creating, upon selection of said delivery points with the most highest rank made in said step of sequentially selecting said delivery points until said predetermined conditions are satisfied, a preliminary course along which said delivery points are visited according to the order determined in said step of determining the order of visiting said delivery points; and
a step of creating a course by sequentially adding, to said preliminary course created in said step of creating said preliminary course, delivery points selected thereafter in said step of sequentially selecting said delivery points,
in said step of determining the order of visiting said delivery points, an order of said delivery points contained in said preliminary course, according to said time specification of each of said delivery points, and, after said preliminary course is created, in said step of sequentially selecting the delivery points, when a delivery point not assigned with any time specifications is selected, said delivery point is inserted to an order of location capable of maximizing said evaluation value.

14. The method of course creation as claimed in Claim 13,
wherein, in said step of creating the course, when a delivery point with a low frequency of delivery rank is selected in said step of sequentially selecting said delivery points, a process of inserting said delivery point into a course capable of maximizing said evaluation value, among the respective cases when said delivery point with the low frequency of delivery rank is contained respectively in the courses along which said commodities are delivered to said delivery points with higher frequency of delivery is repeated.

15. The method of course creation as claimed in Claim 13 or 14, further comprising:
a step of counting, based on said time of arrival calculated in said step of calculating the time, the number of delivery points which are **characterized by** the time of arrival thereto fallen in a zone of the time specification, and are therefore capable of keeping said time specification, among all delivery points assigned with the time specification, and
in said step of calculating the evaluation value, a higher evaluation value is calculated corresponding to a course which contains a larger number of delivery points capable of keeping the time specification calculated in said step of calculating the number of said delivery points.

16. The method of course creation as claimed in Claim 15,
wherein in said step of calculating the number of said delivery points, upon occurrence of the same number of said delivery points capable of keeping said time specification, respective differences between the time specification and the respective times of arrival of all delivery points incapable of keeping said time specification are calculated, and a smaller total value of the differences is judged as a larger number of delivery points capable of keeping said time specification.

17. The method of course creation as claimed in any one of Claims 13 to 16,
wherein in said step of calculating a time of arrival, also a total time necessary for visiting all of said delivery points, when said delivery points selected in said step of sequentially selecting said delivery points are visited according to the order determined in said step of determining the order of visiting said delivery points, is calculated, and
in said step of calculating said evaluation value, upon occurrence of the same number of said delivery points supposed to be highly punctual about said time specification, a higher evaluation value is calculated corresponding to a shorter total time calculated in said step of calculating said time of arrival.
